# EUROPÄISCHE PATENTSCHRIFT

(11) **EP 2 090 457 B1**
(45) Veröffentlichungstag und Bekanntmachung des Hinweises auf die Patenterteilung: **25.07.2012**
(21) Anmeldenummer: 09001015.8
(22) Anmeldetag: 26.01.2009
(51) Int. Cl.: B60L 11/18, B66F 9/24, B66F 9/075, B62B 3/06

(54) **batteriebetriebenes Flurförderfahrzeug mit Kontaktierungssystem**
battery-operated industrial truck including a contacting system
chariot de manutention fonctionnant sur batteries incluant un système de mise en contact

(30) Priorität: 14.02.2008 DE 102008009166
(43) Veröffentlichungstag der Anmeldung: 19.08.2009
(73) Patentinhaber: Jungheinrich Aktiengesellschaft, 22047 Hamburg (DE)
(72) Erfinder: Magens, Ernst-Peter, 22949 Ammersbek (DE); Weber, Christoph, 24558 Henstedt-Ulzburg (DE)
(74) Vertreter: Hauck Patent- und Rechtsanwälte

(56) Entgegenhaltungen:
- GB-A- 2 185 866
- JP-A- 2002 354 687
- US-A- 3 273 038

## Beschreibung

Die Erfindung bezieht sich auf ein batteriebetriebenes Flurförderzeug mit Kontaktierungssystem nach Patentanspruch 1.

Ein großer Teil von Flurförderzeugen ist batteriebetrieben. Dies gilt sowohl für fahrerlose als auch bedienerbetriebene Transportfahrzeuge. Wenn die Batterie zu einem definierten Ladezustand entladen ist, wird die Batterie mit einem Ladegerät verbunden und aufgeladen. Häufig erfolgt die Aufladung auch vor der weitgehenden Entladung, z.B. in einer Arbeitspause, um die Einsatzdauer des Fahrzeugs zu verlängern (Zwischenladung). Im einfachsten Fall wird eine im Fahrzeug befindliche Steckerverbindung zwischen der elektrischen Anlage des Fahrzeugs und der Batterie gelöst und die Batterie über eine Steckerverbindung mit einem Ladegerät verbunden. Dieses Verfahren ist relativ zeitaufwendig und für Zwischenladungen in Arbeitspausen nicht geeignet.

Aus Firmenschrift "Batterieladekontakte für fahrerlose Transportsysteme" von Vahle Stromzuführungen ist bekannt, eine elektrische Verbindung zwischen einem Ladegerät und der in einem Fahrzeug befindlichen Batterie durch Überfahren von bodenseitigen Kontaktelementen durch fahrzeugseitige Kontaktelemente. Letztere sind an der Fahrzeugseite angeordnet. Die bodenseitigen Kontaktelemente sind relativ flache und lang ausgebildete Kontaktschienen, während die fahrzeugseitigen Kontaktelemente federnd gelagerte Schleifkohlen sind, die kürzer, dafür aber höher und breiter ausgeführt sind. Zur Sicherstellung eines ausreichenden Kontaktdrucks beim Ladevorgang müssen die fahrzeugseitigen Kontaktelemente eine kleine Bodenfreiheit aufweisen. Die stationären Kontaktschienen sind relativ flach ausgeführt, um nicht als Stolperfalle zu wirken.

Aus JP 2002354687 ist ein Kontaktierungssystem bekannt, dass seitlich an Flurförderzeuge angebracht wird. Das Kontaktierungssystem ist zum Schutz vor Nässe in einem Gehäuse mit einer Öffnungsklappe untergebracht. Beim Heranfahren an eine Ladevorrichtung stoßen Ladeelektroden in das Gehäuse des Kontaktierungssystems, öffnen so die Öffnungsklappe und stellen einen elektrisch leitenden Kontakt zu den Ladekontakten her.

Eine wesentliche Unterscheidung bei Flurförderzeugen sind die Kategorien Nieder- und Hochhubfahrzeuge. Erstere weisen Gabelarme auf, welche sich über Lasträder am Boden abstützen und die Last aufnehmen. Die Lasträder sind höhenverstellbar. Hochhubfahrzeuge haben eine lastaufnehmende Gabel mit zwei Gabelzinken und Radarme, welche nicht verstellbare Räder lagern.

Der Erfindung liegt die Aufgabe zugrunde, ein batteriebetriebenes Flurförderzeug mit Kontaktierungssystem zu schaffen, insbesondere ein bedienergeführtes Fahrzeug, welches eine große Bodenfreiheit im Normalbetrieb zulässt und insbesondere die Anbringung der fahrzeugseitigen Kontaktelemente in einem begrenzten Raum ermöglichen soll.

Diese Aufgabe wird durch die Merkmale des Patentanspruchs 1 gelöst.

Bei dem erfindungsgemäßen Flurförderzeug sind die fahrzeugseitigen Kontaktelemente an der Unterseite im vorderen Endbereich von Gabelarmen, Gabelzinken bzw. von Radarmverlängerungen des Flurförderzeugs angeordnet. Bei Radarmen sind Verlängerungen erforderlich, die z.B. ebenfalls U-Profil aufweisen, das vom U-Profil der Gabelzinken im abgesenkten Zustand umschlossen wird.

Im Bereich der vorderen Enden von Gabelarmen, Radarmverlängerungen oder Gabelzinken ist ein geeigneter Raum für die Anbringung von Kontaktelementen vorhanden. Dies beruht in erster Linie darauf, dass die Gabelarme Radarmverlängerungen bzw. Gabelzinken ein umgekehrtes U-Profil aufweisen, in dem Kontaktelemente sicher untergebracht werden können, ohne dass eine Beschädigung im Betrieb befürchtet werden muss. Die Anordnung der fahrzeugseitigen Kontaktelemente in Gabelzinken bzw. Gabelarmen hat auch den Vorteil, dass diese bekanntlich höhenverstellbar sind, so dass die Kontaktelemente auf die untergrundseitigen Kontaktelemente von oben aufgesetzt werden können. Die untergrundseitigen Kontaktelemente können daher relativ niedrig und einfach ausgeführt werden. Aber auch bei nicht höhenverstellbaren Radarmen, bei denen die fahrzeugseitigen Kontakte in Verlängerungen untergebracht sind, ist erfindungsgemäß eine automatische Kontaktierung möglich.

Mit der Erfindung wird eine Reihe von Vorteilen erzielt. So entfällt das manuelle Arbeiten zum Laden einer im Fahrzeug befindlichen Batterie. Die erforderliche Zeit vom Ende des Einsatzes des Flurförderzeugs bis zum Beginn des Ladevorgangs wird auf ein Minimum verkürzt. Ein separater Antrieb, der z.B. für die Kontaktierungseinrichtung insbesondere bei großen Bodenfreiheiten erforderlich ist, kann entfallen.

Nachfolgend wird auf vorteilhafte Ausgestaltungen der Erfindung in den Unteransprüchen eingegangen. Eine Ausgestaltung besteht darin, dass die fahrzeugseitigen Kontaktelemente nebeneinander an einem Gabelarm, einer Gabelzinke bzw. einer Radarmverlängerung angeordnet sind. Alternativ kann jeweils ein Kontaktelement in einem Gabelarm, einer Gabelzinke bzw. einer Radarmverlängerung untergebracht sein.

Nach einer weiteren Ausgestaltung der Erfindung sind die fahrzeugseitigen Kontaktelemente schienenartig ausgebildet. Sie sind vorzugsweise in einer Platte aus isolierendem Material teilweise eingebettet, wobei die Platte ihrerseits, beispielsweise durch eine Schraubverbindung, mit dem Gabelarm, der Gabelzinke bzw. der Radarmverlängerung verbunden ist. Die Kontaktierung mit den fahrzeugseitigen Kontaktelementen erfolgt z.B. über eine Schraubverbindung, wobei jedes Kontaktelement über ein Kabel, das ebenfalls innerhalb der Gabelzinke oder der Radarmverlängerung geführt ist, mit einem Batterieanschluss im Fahrzeug verbunden ist.

Das untergrundseitige Kontaktelement ist nach einer anderen Ausgestaltung der Erfindung vorzugsweise federnd abgestützt. Hierzu sieht eine weitere Ausgestaltung der Erfindung vor, dass das untergrundseitige Kontaktelement in einer Ausnehmung einer Halterung schwimmend aufgenommen und vertikal geführt ist, wobei seitliche Ansätze von der Feder gegen Schultern im Bereich der oberen Öffnung der Ausnehmung gedrückt werden. Es versteht sich, dass beide untergrundseitigen Kontaktelemente nebeneinander in separaten Ausnehmungen angebracht sein können, wobei sie jeweils von einer Feder in eine obere Position gedrückt werden. Durch Absenken der Gabelarme bzw. Gabelzinken auf die Kontaktelemente werden diese nach unten gedrückt, wobei die Federkraft eine ausreichende Kontaktkraft herbeiführt.

Um auf einfache Weise ein lagerichtiges Zusammenführen von fahrzeugseitigen und untergrundseitigen Kontaktelementen zu bewerkstelligen, sieht eine Ausgestaltung der Erfindung einen Anschlag vor, gegen den die Gabelarme, Gabelzinken bzw. Radarmverlängerungen anstoßen können. Ist dies der Fall, haben die Kontaktelemente den richtigen Abstand zueinander. Verbessert wird die Führung durch eine weitere Ausgestaltung der Erfindung, bei der mindestens eine seitliche Führung vorgesehen ist, welche das Zentrieren der Gabelarme, Gabelzinken bzw. Radarme bezüglich der untergrundseitigen Kontaktelemente erleichtert.

Bei dem beschriebenen Kontaktierungssystem wird davon ausgegangen, dass die Gabelzinken bzw. Gabelarme im ausreichend angehobenen Zustand über die untergrundseitigen Kontaktelemente gefahren und anschließend abgesenkt werden. In einer Ausgestaltung der Erfindung ist auch möglich, die Gabelarme bzw. die Gabelzinken bzw. die Radarmverlängerungen ohne Anheben mit den untergrundseitigen Kontaktelementen zusammenzubringen. Hierzu sieht die Ausgestaltung der Erfindung vor, dass die Halterung für die untergrundseitigen Kontaktelemente an einem Arm eines um eine horizontale Achse schwenkbar gelagerten zweiarmigen Hebels angebracht ist, wobei der eine Arm von einer Feder in eine Ausnehmung des Untergrunds vorgespannt ist, während der andere Arm über den Untergrund angehoben ist derart, dass das Ende eines Gabelarms bzw. Radarms bzw. einer Gabelzinke gegen den angehobenen zweiten Arm stößt und den Hebel soweit verschwenkt, dass die untergrundseitigen Kontaktelemente nach oben an die fahrzeugseitigen Kontaktelemente gedrückt werden. Hierbei entfällt jede Hubbewegung zur Kontaktierung, wobei die fahrzeugseitigen Kontaktelemente gleichwohl eine große Bodenfreiheit aufweisen können. Die untergrundseitigen Kontaktelemente können in einer weiteren Ausgestaltung der Erfindung auch mit relativ kurzen fahrzeugseitigen Kontaktelementen angefahren werden, was etwa der Fall ist, wenn der Abstand des Lastrades zum vorderen Ende des Radarms, Gabelarms bzw. der Gabelzinke gering ist.

Eine Höhenverstellung von Gabelzinken oder Gabelarmen kann entfallen, wenn eine Rampe vorgesehen ist, die einer untergrundseitigen Kontaktanordnung vorgeordnet ist und auf welcher die Lasträder hochfahren und durch eine Vertiefung in der Rampe wieder etwas abgesenkt werden.

Ausführungsbeispiele der Erfindung werden nachfolgend anhand von Zeichnungen näher erläutert.
- Fig. 1: zeigt perspektivisch angedeutet ein Niederhub-Flurförderzeug.
- Fig. 2: zeigt perspektivisch angedeutet ein Hochhub-Flurförderzeug.
- Fig. 3: zeigt ein untergrundseitiges Kontaktelement nach der Erfindung.
- Fig. 4: zeigt das Überfahren des Kontaktelements nach Fig. 3 durch einen Gabelarm bzw. eine Gabelzinke.
- Fig. 5: zeigt eine andere Ausführungsform eines untergrundseitigen Kontaktelements vor der Kontaktierung mit einem fahrzeugseitigen Kontaktelement.
- Fig. 6: zeigt eine ähnliche Ausführung wie Fig. 5, jedoch mit einem abgewandelten Hebelarm für das untergrundseitige Kontaktelement.
- Fig. 7: zeigt das Überfahren des untergrundseitigen Kontaktelements nach Fig. 5 in den einzelnen Phasen.
- Fig. 8: zeigt in einzelnen Darstellungen das Überfahren des untergrundseitigen Kontaktelements nach Fig. 6 in den einzelnen Phasen.
- Fig. 9: zeigt ein Kontaktelement nach Fig. 3 mit einer Auffahrrampe.
- Fig. 10: zeigt ein Kontaktelement nach Fig. 9 in Eingriff mit einem fahrzeugseitigen Kontakt.

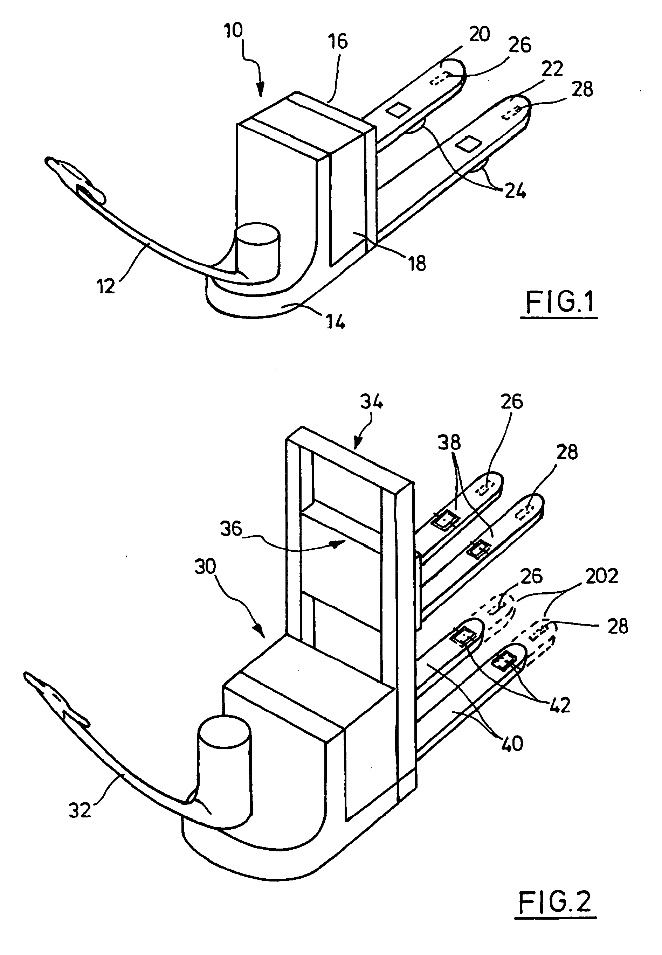

Fig. 1 zeigt ein Niederhub-Flurförderzeug 10, das von einer Deichsel 12 betätigt wird, wobei das Antriebsteil mit 14 und das Lastteil mit 16 bezeichnet ist. Die Batterie ist zwischen Antriebs- und Lastteil bei 18 zu erkennen. Das Flurförderzeug 10 weist zwei Gabelarme 20, 22 auf, welche Lasträder 24 lagern. Zwischen Lasträdern 24 und den Enden der Gabelarme 20, 22 ist ein Abstand vorhanden, in dem Kontaktelemente 26, 28 untergebracht sind (gestrichelt gezeichnet). Die Anordnung der Kontaktelemente 26, 28 wird weiter unten noch erläutert.

In Fig. 2 ist ein Hochhub-Flurförderzeug 30 gezeichnet, das ebenfalls von einer Deichsel 32 bedienbar ist und das einen Mast 34 aufweist, an dem ein Lastschlitten 36 höhenverschiebbar geführt ist, an dem Gabelzinken 38 angebracht sind. Die Abstützung des Hochhub-Flurförderzeugs erfolgt über Radarme 40, die Lasträder 42 am vorderen Ende lagern. Im abgesenkten Zustand umschließen die Gabelzinken 38 die Radarme 40, wobei die vorderen Enden der Gabelzinken 38 über die Radarme 40 überstehen. Im Bereich des Überstands sind wiederum Kontaktelemente 26 bzw. 28 angeordnet (gestrichelt gezeichnet).

In Fig. 2 sind Verlängerungen 202 der Radarme 40 gestrichelt gezeigt, die alternativ zu dem Gabelzinken 38 Kontaktelemente 26, 28 aufweisen können. Die Verlängerungen 202 werden von dem Gabelzinken im abgesenkten Zustand umschlossen.

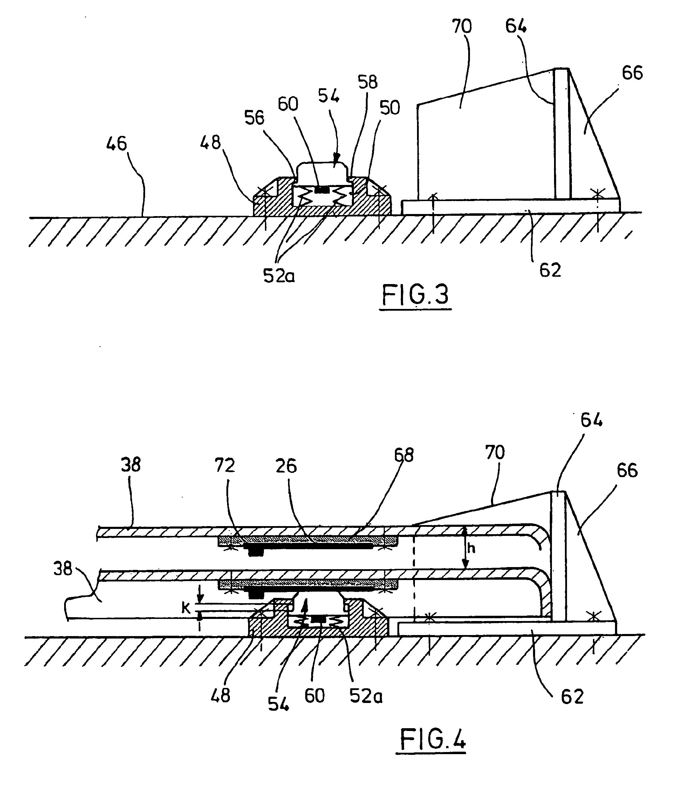

In Fig. 3 ist gezeigt, wie auf einem Untergrund 46 eine Halterung 48 aus isolierendem Material angebracht ist, beispielsweise durch eine Schraubverbindung. Die Halterung weist eine Ausnehmung 50 auf, in der eine Federanordnung 52a untergebracht ist, die ein Kontaktelement 54 nach oben zu drücken sucht. Das Kontaktelement hat gegenüberliegende seitliche Ansätze 56, die mit Schultern 58 zusammenwirken, welche im Bereich der Öffnung der Ausnehmung 50 geformt sind. Die Schultern 58 bilden einen Anschlag für das Kontaktelement 54, das in Fig. 3 seine maximale vertikale Position einnimmt. An der Unterseite des Kontaktelements 54 ist eine Schraubverbindung 60 angedeutet für die Verbindung mit einem nicht gezeigten Kabel, das seinerseits zu einem nicht gezeigten Ladegerät geführt ist. Es versteht sich, dass ein zweites Kontaktelement erforderlich ist, das hier nicht gezeigt ist und das in gleicher Weise wie in Fig. 3 ausgebildet sein kann, beispielsweise im seitlichen Abstand zum gezeigten Kontaktelement. Es ist auch denkbar, zwei Kontaktelemente in der Halterung 48 unterzubringen, die dann zwei Ausnehmungen nebeneinander aufweist, um einen Kurzschluss zu vermeiden.

Rechts in Fig. 3 neben der Halterung 48 ist eine Platte 62 aus Metall z.B. mit dem Untergrund 46 verbunden, auf der eine vertikale Anschlagplatte 64 verschweißt ist, die durch ein Blech 66 versteift ist. Ein Leitblech 70 dient zur seitlichen Führung der Gabel- bzw. Radarme quer zur Fahrtrichtung.

Wie in Fig. 4 dargestellt, kann etwa eine Gabelzinke 38 gemäß Fig. 2 im ausreichend angehobenen Zustand gegen den Anschlag 64 gefahren werden. Das schienenartige Kontaktelement 26 ist an der Unterseite einer Platte 68 aus isolierendem Material angebracht, wobei es teilweise eingebettet ist. Die Halteplatte 68 ist gegen die Unterseite des horizontalen Steges der Gabelzinke 38 geschraubt. Die Gabelzinke ist im Querschnitt umgekehrt U-förmig, wie an sich bekannt. Bei 70 ist eine seitliche Führung angedeutet, die schräg zur Anschlagplatte 64 angeordnet ist, um eine Zentrierung der Gabelzinken 38 bezüglich der beiden Kontaktelemente zu erzielen.

Wird, wie ebenfalls in Fig. 4 dargestellt, die Gabelzinke 38 abgesenkt um den Betrag h, erfolgt eine Kontaktierung vom schienenartigen Kontaktelement 26 mit dem Kontaktelement 54, wobei letzteres um einen Betrag k gegen die Federanordnung 52a nach unten bewegt wird. An dem schienenartigen Kontaktelement 26 ist eine Schraubverbindung 72 zu erkennen, die mit einem nicht gezeigten Kabel in Verbindung ist, das im Inneren des Gabelarms geführt ist zum Antriebsteil des Flurförderzeugs 30 bzw. zu der darin angeordneten Batterie. Dies ist in Fig. 4 nicht gezeigt.

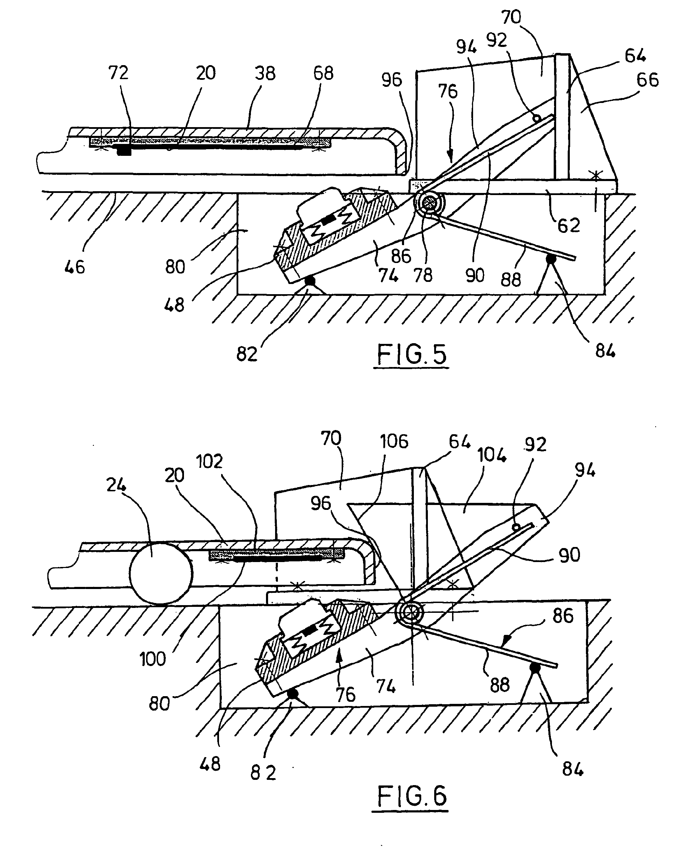

In den Fign. 5 und 6 ist das untergrundseitige Kontaktelement 54 in gleicher Weise ausgebildet und angeordnet, wie dies in den Fign. 3 und 4 gezeigt ist, so dass gleiche Bezugszeichen verwendet werden.

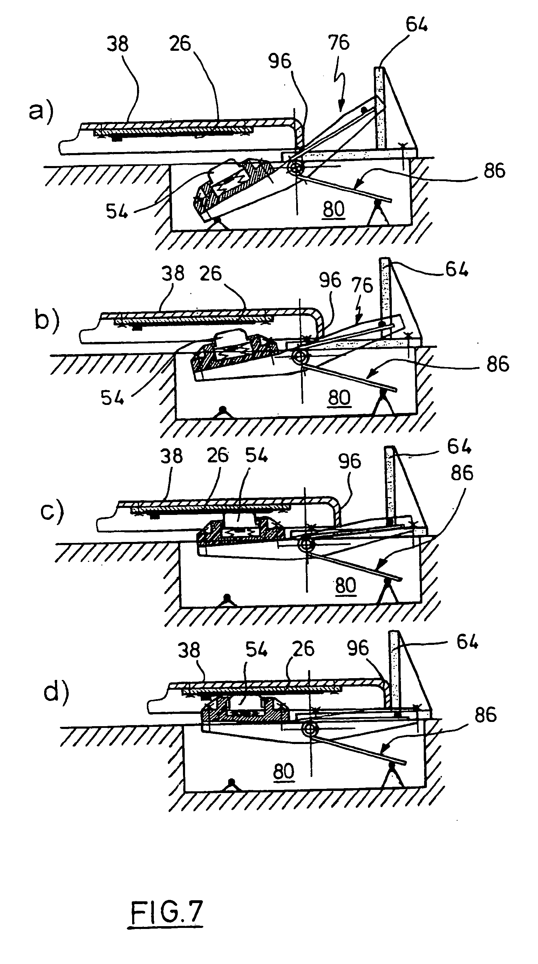

Die Halterung 48 sitzt an einem Arm 74 eines doppelarmigen Hebels 76, der bei 78 unterhalb der Platte 62 drehbar gelagert ist. Die Platte erstreckt sich teilweise über eine Ausnehmung 80 im Untergrund 46, an dessen Boden Anschläge 82 bzw. 84 angeordnet sind. Auf der Lagerachse 78 ist eine Schenkelfeder 86 gelagert, deren einer Schenkel 88 am Anschlag 84 anliegt, und deren anderer Schenkel 90 an einem Anschlag 92 am Hebelarm 94 anliegt. Daher wird in der in Fig. 5 gezeigten Position der Hebelarm 74 gegen den Anschlag 82 vorgespannt. Der Hebelarm 94 wird auf diese Weise aus der Ausnehmung 80 herausgeschwenkt in eine schräg angehobene Position. Wird nun der Gabelzinke 38 mit ihrem vorderen Ende 96 gegen die zugekehrte Seite des Hebelarms 94 gefahren, wird er nach unten geschwenkt mit der Folge, dass das Kontaktelement 54 mit dem Hebelarm 74 nach oben geschwenkt wird. Dieser Vorgang ist in Fig. 7 in einzelnen Phasen dargestellt. Das vordere Ende 96 gleitet dabei auf der zugekehrten Seite des Hebelarms 94 entlang und schwenkt diesen allmählich nach unten und bringt dadurch das Kontaktelement 54 gegen das fahrzeugseitige Kontaktelement 26 in Eingriff. In Fig. 7 ist der Eingriff bereits teilweise hergestellt und endgültig erreicht, wenn das vordere Ende 96 gegen die Anschlagplatte 64 anschlägt. Hierbei bewegt sich das Kontaktelement 54 schleifend gegen das Kontaktelement 26 und kann dadurch auch eine Reinigung bewirken.

Nach Beendigung der Aufladung der Batterie des Flurförderzeugs werden die Gabelzinken 38 wieder zurückgezogen in umgekehrter Richtung, wie dies in Fig. 7 angedeutet ist. Dadurch gelangt der Hebel 76 wieder in die in den Fign. 5 und 7a gezeigte Position mit Hilfe der von der Schenkelfeder 86 aufgebrachten Rückstellkraft.

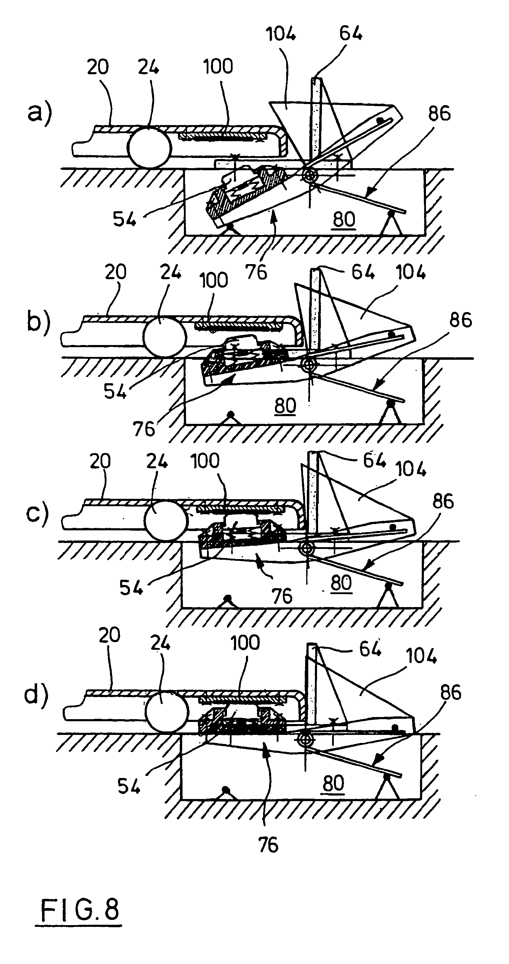

In der Ausführungsform nach Fig. 6 ist etwa ein Gabelarm 20 nach Fig. 1 dargestellt. Man erkennt, dass der Abstand zwischen dem Lastrad 24 und dem Ende 96 des Gabelarms relativ kurz ist. Entsprechend kürzer ist mithin auch das schienenartige Kontaktelement 100, das an der Unterseite des Steges des U-Profils des Gabelarms 20 angebracht ist, wiederum an einer isolierenden Platte 102. In der Ausnehmung 80 ist wiederum der Hebel 96 angeordnet, in gleicher Weise wie in Fig. 5. Auch das Kontaktelement 54 ist in gleicher Weise angeordnet, wie dies in Verbindung mit Fig. 5 erläutert wurde. Die Besonderheit in Fig. 6 ist, dass auf dem Hebelarm 94 ein Anschlagblech 104 angeordnet ist mit einer nach vorn weisenden Anschlagfläche 106, welche sich annähernd senkrecht zum Hebel 76 erstreckt. In Fig. 8 sind die einzelnen Phasen der Kontaktierung des Kontaktelements 100 dargestellt. Aufgrund des Anschlags 104 benötigt der Gabelarm 20 eine geringere Strecke als z.B. die Gabelzinke 38 nach Fig. 7, um eine Kontaktierung der Kontaktelemente 54, zu erzielen, nachdem der Gabelarm 20 an der Anschlagplatte 64 angekommen ist. Dies ist von Vorteil, da die Länge des fahrzeugseitigen Kontaktelements 100 wegen der relativen Nähe der Lasträder 24 zu den Enden der Gabelarme 20 relativ gering ist.

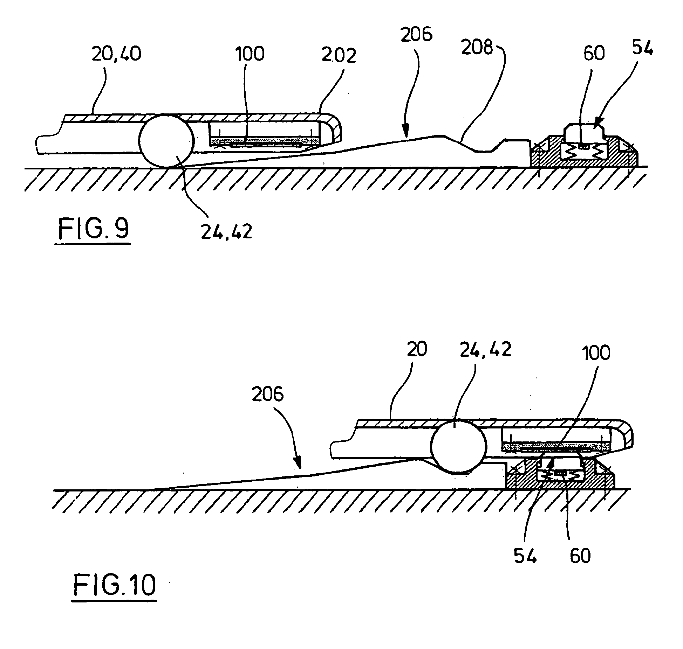

In den Fign. 9 und 10 ist eine untergrundseitige Kontaktanordnung 54 dargestellt, wie sie etwa auch in den Fign. 3 und 4 gezeigt ist. Daher werden auch gleiche Bezugszeichen verwendet. Wie außerdem zu erkennen, ist vor der Kontaktanordnung 54 eine Rampe 206 angeordnet mit einer Vertiefung 208 nahe der Kontaktanordnung 54.

In den Fign. 9 und 10 ist außerdem ein Gabelarm 20 dargestellt, entsprechend den Gabelarmen nach Fig. 1. Es versteht sich, dass statt der höhenverstellbaren Lasträder 24 nach Fig. 1 in den Fign. 9 und 10 die Höhenverstellbarkeit weggelassen ist. Alternativ kann auch ein Radarm 40 gemeint sein mit Radarmverlängerungen 202, wie sie in Fig. 2 angedeutet sind. Beim Anfahren der Kontaktanordnung 54 laufen die Lasträder 24 bzw. 42 auf die Rampe 206, bis die Lasträder 24 bzw. 42 in die Ausnehmung 208 eingreifen. In diesem Augenblick befindet sich die fahrzeugseitige Kontaktanordnung 100 oberhalb der untergrundseitigen Kontaktanordnung 54. Durch Einfahren in die Ausnehmung 208 wird die fahrzeugseitige Kontaktanordnung 100 automatisch wieder abgesenkt, so dass eine Kontaktierung der Kontaktanordnung 100, 54 erfolgt. Diese Lösung hat den Vorteil, dass ein Anheben der Gabelarme 20 oder Gabelzinken 38 zum Kontaktieren nicht erforderlich ist. Auch das Entfernen von der bodenseitigen Kontaktanordnung 54 benötigt kein Anheben der fahrzeugseitigen Kontaktanordnung.

## Patentansprüche

1. Batteriebetriebenes Flurförderzeug mit Kontaktierungssystem, mit zwei Kontaktelementen am Flurförderzeug, die mit zwei am Untergrund angebrachten Kontaktelementen eines Ladegeräts zusammenwirken, **dadurch gekennzeichnet, dass** die fahrzeugseitigen Kontaktelemente (26, 28 bzw. 100) an der Unterseite im vorderen Endbereich von Gabelzinken (38) bzw. Radarmverlängerungen (202) bzw. Gabelarmen (20, 22) angeordnet sind.

2. Flurförderzeug nach Anspruch 1, **dadurch gekennzeichnet, dass** die fahrzeugseitigen Kontaktelemente nebeneinander an einer Gabelzinke, einer Radarmverlängerung bzw. an einem Radarm angeordnet sind.

3. Flurförderzeug nach Anspruch 1, **dadurch gekennzeichnet, dass** jeweils ein Kontaktelement (26, 28 bzw. 100) an einer Gabelzinke (38), einer Radarmverlängerung (202) bzw. einem Gabelarm (20, 22) angebracht sind.

4. Flurförderzeug nach einem der Ansprüche 1 bis 3, **dadurch gekennzeichnet, dass** die fahrzeugseitigen Kontaktelemente zwischen den Schenkeln an der Unterseite des Steges eines im Querschnitt umgekehrt U-förmigen Profils der Gabelzinken (38), Radarmverlängerungen (202) oder der Gabelarme (20, 22) angebracht sind.

5. Flurförderzeug nach einem der Ansprüche 1 bis 4, **dadurch gekennzeichnet, dass** die fahrzeugseitigen Kontaktelemente (26, 28, 100) schienenartig ausgebildet sind.

6. Flurförderzeug nach Anspruch 5, **dadurch gekennzeichnet, dass** die schienenartigen Kontaktelemente (26, 28, 100) teilweise in einer Platte (68) aus isolierendem Material eingebettet sind.

7. Flurförderzeug nach einem der Ansprüche 1 bis 6, **dadurch gekennzeichnet, dass** eine Schraubverbindung (72) an den fahrzeugseitigen Kontaktelementen (26, 28) für die Verbindung mit jeweils einem Kabel vorgesehen ist, das seinerseits innerhalb der Gabelzinke (38), der Radarmverlängerung bzw. des Gabelarms zu einem Batterieanschluss im Flurförderzeug geführt ist.

8. Flurförderzeug nach einem der Ansprüche 1 bis 7, **dadurch gekennzeichnet, dass** die untergrundseitigen Kontaktelemente (54) in einer Halterung (48) aus isolierendem Material federnd abgestützt sind.

9. Flurförderzeug nach Anspruch 8, **dadurch gekennzeichnet, dass** die untergrundseitigen Kontaktelemente (54) in einer Ausnehmung (50) der Halterung (48) schwimmend aufgenommen und vertikal geführt sind, wobei seitliche Ansätze (56) von der Feder (52) gegen Schultern (58) im Bereich der oberen Öffnung der Ausnehmung (50) angedrückt werden.

10. Flurförderzeug nach einem der Ansprüche 1 bis 9, **dadurch gekennzeichnet, dass** an dem Untergrund (46) ein Anschlag (64) angebracht ist zur Begrenzung der Bewegung der Gabelzinken bzw. Radarmverlängerungen bzw. Gabelarme bei der Kontaktierung der Kontaktelemente.

11. Flurförderzeug nach Anspruch 10, **dadurch gekennzeichnet, dass** eine seitliche Führung (70) vor dem Anschlag (64) vorgesehen ist zur seitlichen Ausrichtung der Kontaktelemente, wenn sich die Gabelzinken, Radarmverlängerungen bzw. Gabelarme gegen den Anschlag (64) bewegen.

12. Flurförderzeug nach einem der Ansprüche 1 bis 11, **dadurch gekennzeichnet, dass** vor die untergrundseitigen Kontaktelementen (54) eine Rampe (206) für das Auffahren der Lasträder (24, 42) der Gabelarme (20) bzw. Radarme (40) angeordnet ist und die Rampe (206) nahe den bodenseitigen Kontaktelementen (54) eine Vertiefung (208) aufweist derart, dass die Kontaktelemente (26) der Gabelarme (20) bzw. Radarme (40) mit den bodenseitigen Kontaktelementen (54) im Eingriff sind, wenn sich die Lasträder (24, 42) in der Vertiefung (208) befinden.

13. Flurförderzeug nach einem der Ansprüche 8 bis 12, **dadurch gekennzeichnet, dass** die Halterung (48) an einem Arm (74) eines um eine horizontale Achse schwenkbar gelagerten zweiarmigen Hebels (76) angebracht ist, wobei der eine Arm (74) von einer Feder (86) in eine Ausnehmung (80) des Untergrunds (46) vorgespannt ist, während der andere Arm (94) über den Untergrund angehoben ist derart, dass das Ende einer Gabelzinke, einer Radarmverlängerung oder eines Gabelarms gegen den angehobenen zweiten Hebelarm (94) stößt und der Hebel (76) soweit verschwenkt wird, dass die untergrundseitigen Kontaktelemente (54) an die fahrzeugseitigen Kontaktelemente (26, 28, 100) gedrückt werden.

14. Flurförderzeug nach Anspruch 13, **dadurch gekennzeichnet, dass** die Feder (86) eine Schenkelfeder ist.

15. Flurförderzeug nach Anspruch 13 oder 14, **dadurch gekennzeichnet, dass** der zweite Hebelarm (94) eine quer zur Erstreckung des zweiten Hebelarms (94) verlaufende Anschlagfläche (106) aufweist, gegen die das freie Ende des Gabelarms bzw. Radarms stößt.

## Claims

1. Battery-operated industrial truck including a contacting system with two contact elements on the industrial truck which cooperate with two contact elements of a battery charger attached to the underground, **characterised in that** the contact elements (26, 28 or respectively 100) on the vehicle side are arranged on the underside in the front end region of fork tines (38) or respectively wheel arm extensions (202) or respectively fork arms (20, 22).

2. Industrial truck according to Claim 1, **characterised in that** the contact elements on the vehicle side are arranged adjacent to one another on a fork tine, a wheel arm extension or respectively on a wheel arm.

3. Industrial truck according to Claim 1, **characterised in that** in each case a contact element (26, 28 or respectively 100) is attached to a fork tine (38), a wheel arm extension (202) or respectively a fork arm (20, 22).

4. Industrial truck according to one of Claims 1 to 3, **characterised in that** the contact elements on the vehicle side are attached between the limbs on the underside of the projection of a profile of the fork tines (38), wheel arm extensions (202) or the fork arms (20, 22) which has a reverse U-shaped cross section.

5. Industrial truck according to one of Claims 1 to 4, **characterised in that** the contact elements (26, 28, 100) on the vehicle side are of rail-like configuration.

6. Industrial truck according to Claim 5, **characterised in that** the rail-like contact elements (26, 28, 100) are partially embedded in a plate (68) made of insulating material.

7. Industrial truck according to one of Claims 1 to 6, **characterised in that** a screw connection (72) is provided on the contact elements (26, 28) on the vehicle side for the connection to one respective cable, which in turn is guided inside the fork tine (38), the wheel arm extension or respectively the fork arm to a battery terminal in the industrial truck.

8. Industrial truck according to one of Claims 1 to 7, **characterised in that** the contact elements (54) on the underground side are supported in a resilient manner in a mounting (48) made of insulating material.

9. Industrial truck according to Claim 8, **characterised in that** the contact elements (54) on the underground side are floatingly received and vertically guided in a recess (50) of the mounting (48), lateral projections (56) being pressed by the spring (52) against shoulders (58) in the region of the upper opening of the recess (50).

10. Industrial truck according to one of claims 1 to 9, **characterised in that** a stop (64) is attached to the underground (46) to limit the movement of the fork tines or respectively wheel arm extensions or respectively fork arms when the contact elements are in contact.

11. Industrial truck according to Claim 10, **characterised in that** a lateral guide (70) in front of the stop (64) is provided for lateral alignment of the contact elements, when the fork tines, wheel arm extensions or respectively fork arms move against the stop (64).

12. Industrial truck according to one of Claims 1 to 11, **characterised in that** a ramp (206) to be driven onto by the load wheels (24, 42), the fork arms (20) or respectively wheel arms (40) is arranged in front of the contact elements (54) on the underground side, and the ramp (206) in the vicinity of the contact elements (54) on the ground side comprises a recess (208), such that the contact elements (26) of the fork arms (20) or respectively wheel arms (40) are in engagement with the contact elements (54) on the ground side when the load wheels (24, 42) are located in the recess (208).

13. Industrial truck according to one of Claims 8 to 12, **characterised in that** the mounting (48) is attached to an arm (74) of a two-arm lever (76), pivotably mounted about a horizontal axis, the one arm (74) being pretensioned by a spring (86) in a recess (80) of the underground (46), whilst the other arm (94) is raised above the underground such that the end of a fork tine, a wheel arm extension or a fork arm strikes against the raised second lever arm (94) and the lever (76) is pivoted sufficiently far that the contact elements (54) on the underground side are pressed onto the contact elements (26, 28, 100) on the vehicle side.

14. Industrial truck according to Claim 13, **characterised in that** the spring (86) is a leg spring.

15. Industrial truck according to Claim 13 or 14, **characterised in that** the second lever arm (94) comprises a stop surface (106) extending transversely to the extension of the second lever arm (94), against which the free end of the fork arm or respectively wheel arm strikes.

## Revendications

1. Chariot de manutention fonctionnant sur batteries incluant un système de mise en contact, avec deux éléments de contact sur le chariot de manutention qui coopèrent avec deux éléments de contact d'un chargeur mis en place sur le sol, **caractérisé en ce que** les éléments de contact (26, 28 ou 100) côté véhicule sont disposés sur le côté inférieur dans la zone extrême avant de dents de fourche (38) ou de prolongements de bras de roue (202) ou de bras de fourche (20, 22).

2. Chariot de manutention selon la revendication 1, **caractérisé en ce que** les éléments de contact côté véhicule sont disposés de façon juxtaposée sur une dent de fourche, un prolongement de bras de roue ou sur un bras de roue.

3. Chariot de manutention selon la revendication 1, **caractérisé en ce que** respectivement un élément de contact (26, 28 ou 100) est mis en place sur une dent de fourche (38), un prolongement de bras de roue (202) ou un bras de fourche (20, 22).

4. Chariot de manutention selon une des revendications 1 à 3, **caractérisé en ce que** les éléments de contact côté véhicule sont mis en place entre les branches sur le côté inférieur de l'entretoise d'un profilé en U, inversé en coupe, des dents de fourche (38), des prolongements de bras de roue (202) ou des bras de fourche (20, 22).

5. Chariot de manutention selon une des revendications 1 à 4, **caractérisé en ce que** les éléments de contact (26, 28 ou 100) côté véhicule sont constitués à la façon de rails.

6. Chariot de manutention selon la revendication 5, **caractérisé en ce que** les éléments de contact (26, 28 ou 100) à la façon de rails sont noyés partiellement dans une plaque (68) en matériau isolant.

7. Chariot de manutention selon une des revendications 1 à 6, **caractérisé en ce qu'**un assemblage vissé (72) est prévu sur les éléments de contact (26, 28) côté véhicule pour le raccordement à respectivement un câble qui, de son côté, est guidé à l'intérieur de la dent de fourche (38), du prolongement de bras de roue ou respectivement du bras de fourche pour une connexion à la batterie dans le chariot de manutention.

8. Chariot de manutention selon une des revendications 1 à 7, **caractérisé en ce que** les éléments de contact (54) côté sol sont supportés de façon élastique dans un élément de retenue (48) en matériau isolant.

9. Chariot de manutention selon la revendication 8, **caractérisé en ce que** les éléments de contact (54) côté sol sont logés de façon flottante dans un creux (50) de l'élément de retenue (48) et sont guidés verticalement, des taquets (56) étant pressés par le ressort (52) contre des épaulements (58) dans la zone de l'ouverture supérieure du creux (50).

10. Chariot de manutention selon une des revendications 1 à 9, **caractérisé en ce que**, sur le sol (46), il est mis en place une butée (64) pour limiter le mouvement des dents de fourche ou respectivement des prolongements de bras de roue ou respectivement des bras de fourche lors de la mise en contact des éléments de contact.

11. Chariot de manutention selon la revendication 10, **caractérisé en ce que** qu'il est prévu un guidage latéral (70) avant la butée (64) pour l'orientation latérale des éléments de contact quand les dents de fourche, les prolongements de bras de roue ou respectivement les bras de fourche se déplacent contre la butée (64).

12. Chariot de manutention selon une des revendications 1 à 11, **caractérisé en ce que**, avant les éléments de contact (54) côté sol, il est disposé une rampe (206) pour la montée des roues de charge (24, 42) des bras de fourche (20) ou des bras de roue (40), et **en ce que** la rampe présente, près des éléments de contact (54) côté sol, une dépression (208) de sorte que les éléments de contact (26) des bras de fourche (20) ou des bras de roue (40) sont en prise avec les éléments de contact (54) côté sol quand les roues de charge (24, 42) sont dans la dépression (208).

13. Chariot de manutention selon une des revendications 8 à 12, **caractérisé en ce que** l'élément de retenue (48) est mis en place sur un bras (74) d'un levier (76) à deux bras supporté en pivotement autour d'un axe horizontal, un bras (74) étant prétendu par un ressort (86) dans un creux (80) du sol (46) pendant que l'autre bras (94) est soulevé au-dessus du sol de sorte que l'extrémité d'une dent de fourche, d'un prolongement de bras de roue ou d'un bras de fourche vient heurter le deuxième bras de levier (94) soulevé, et de sorte que le levier (76) est pivoté suffisamment pour que les éléments de contact (54) côté sol soient pressés sur les éléments de contact (26, 28 ou 100) côté véhicule.

14. Chariot de manutention selon la revendication 13, **caractérisé en ce que** le ressort (86) est un ressort à branches.

15. Chariot de manutention selon la revendication 13 ou 14, **caractérisé en ce que** le deuxième bras de levier (94) présente une face de butée (106) qui est dirigée transversalement à l'extension du deuxième bras de levier (94) et contre laquelle vient heurter l'extrémité libre du bras de fourche ou du bras de roue.
